# EUROPÄISCHE PATENTSCHRIFT

(11) **EP 3 183 130 B1**
(45) Veröffentlichungstag und Bekanntmachung des Hinweises auf die Patenterteilung: **10.10.2018**
(21) Anmeldenummer: 15745501.5
(22) Anmeldetag: 05.08.2015
(51) Int. Cl.: B60H 1/00, B60H 1/34

(54) **LUFTAUSTRITTSVORRICHTUNG ZUR GESTEUERTEN ZUFUHR VON LUFT ZU EINEM FAHRZEUGINNENRAUM**
AIR OUTLET DEVICE FOR FEEDING AIR TO A VEHICLE INTERIOR IN AN CONTROLLED MANNER
DISPOSITIF DE SORTIE D'AIR PERMETTANT L'AMENÉE COMMANDÉE D'AIR À L'HABITACLE D'UN VÉHICULE

(30) Priorität: 21.08.2014 DE 102014216573
(43) Veröffentlichungstag der Anmeldung: 28.06.2017
(73) Patentinhaber: Bayerische Motoren Werke Aktiengesellschaft, 80809 München (DE)
(72) Erfinder: ELTROP, Raphael, 80807 Muenchen (DE)
(86) Internationale Anmeldenummer: PCT/EP2015/068109
(87) Internationale Veröffentlichungsnummer: WO 2016/026705

(56) Entgegenhaltungen:
- DE-A1- 19 943 822
- DE-A1-102006 032 587
- JP-A- S60 169 044
- US-A- 4 377 107
- US-A1- 2006 223 430

## Beschreibung

Die vorliegende Erfindung betrifft eine Luftaustrittsvorrichtung zur gesteuerten Zufuhr von Luft zu einem Fahrzeuginnenraum eines Kraftfahrzeugs, d.h. eine Luftausströmvorrichtung zur Belüftung des Fahrzeuginnenraums des Kraftfahrzeugs mit ggf. klimatisierter Luft. Eine derartige Luftaustrittsvorrichtung ist aus der US 2006/223430 A1 bekannt.

Eine bekannte Luftaustrittsvorrichtung in einem Kraftfahrzeug ist beispielsweise im Bereich einer Armaturentafel eines Kraftfahrzeuginnenraums angeordnet. Die bekannte Luftaustrittsvorrichtung weist dabei Mittel auf, die es ermöglichen eine Richtung der aus einer Luftaustrittsöffnung der Luftaustrittsvorrichtung strömenden Luft einzustellen. Die bekannte Luftaustrittsöffnung hat beispielsweise einen rechteckigen Querschnitt, wobei benachbart zu oder in der Luftaustrittsöffnung mehrere Lamellen parallel zueinander und gleichzeitig schwenkbar angeordnet sind. Ein Verschwenken dieser Lamellen ermöglicht beispielsweise eine Steuerung der austretenden Luft in eine Richtung nach unten oder eine Richtung nach oben. In einem Luftströmungskanal der Luftaustrittsvorrichtung hinter der Luftaustrittsöffnung sind dabei weitere Lamellen parallel zueinander und gleichzeitig schwenkbar angeordnet, die eine Richtung der austretenden Luft nach links oder nach rechts verändern können.

Der Luftstrom lässt sich dabei umso besser steuern, je länger die Lamellen in Luftströmungsrichtung sind bzw. je enger die Lamellen zueinander angeordnet sind.

Eine enge Anordnung der Lamellen hat die Eigenschaft, dass zwar eine Richtung der ausströmenden Luft hinreichend gesteuert werden kann, jedoch eine austretende Luftmenge mit zunehmender Verschwenkung der Lamellen aus einer Mittellage geringer wird.

Es ist die Aufgabe der vorliegenden Erfindung eine Luftaustrittsvorrichtung zur gesteuerten Zufuhr von Luft zu einem Fahrzeuginnenraum zu schaffen, die in alle Ausströmrichtungen der Luft eine große Luftmenge ermöglicht.

Diese Aufgabe wird durch eine Luftaustrittsvorrichtung zur gesteuerten Zufuhr von Luft zu einem Fahrzeuginnenraum gelöst, die die Merkmale von Patentanspruch 1 aufweist. Insbesondere hat eine erfindungsgemäße Luftaustrittsvorrichtung zur gesteuerten Zufuhr von Luft zu einem Fahrzeuginnenraum, d.h. einen Fahrgastraum, eines Kraftfahrzeugs einen Luftströmungskanal und ein Luftaustrittsöffnungselement, das eine Luftaustrittsöffnung aufweist. Durch die Luftaustrittsöffnung ist insbesondere Luft, die aus dem Luftströmungskanal strömt, gerichtet in den Fahrzeuginnenraum strömbar. Der Luftströmungskanal ist mit dem Luftaustrittsöffnungselement verbunden und ist angepasst, Luft von einer Innenraumbelüftungsvorrichtung über die Luftaustrittsöffnung in den Fahrzeuginnenraum zu leiten. Das Luftaustrittsöffnungselement ist insbesondere ortsfest in dem Fahrzeuginnenraum anbringbar. Der Luftströmungskanal hat einen ersten Kanalabschnitt und einen zweiten Kanalabschnitt, der zwischen dem ersten Kanalabschnitt und dem Luftaustrittsöffnungselement angeordnet ist. Mit anderen Worten sind in Luftströmungsrichtung der erste Kanalabschnitt, der zweite Kanalabschnitt und das Luftaustrittsöffnungselement hintereinander angeordnet. Der erste Kanalabschnitt ist in eine Richtung quer zu seiner Längsachse verschiebbar, d.h. translatorisch verlagerbar, ausgebildet. Insbesondere ist der erste Kanalabschnitt ausgebildet, um eine Richtung der aus der Luftaustrittsöffnung strömenden Luft entsprechend seiner Verschiebung zu steuern, d.h. eine Richtung der ausströmenden Luft einzustellen.

Der zweite Kanalabschnitt ist bevorzugt angrenzend zu dem ersten Kanalabschnitt angeordnet, wobei das Luftaustrittsöffnungselement angrenzend zu dem zweiten Kanalabschnitt angeordnet ist.

Das Luftaustrittsöffnungselement kann beispielsweise an einer Armaturentafel, einer Fahrzeugtür, oder einer Mittelkonsole anordenbar bzw. anbringbar sein. Die Innenraumbelüftungsvorrichtung kann beispielsweise eine Klimatisierungsvorrichtung sein, die Frischluft und/oder klimatisierte Luft erzeugt und zu dem Fahrzeuginnenraum fördert.

Durch eine Verschiebung des ersten Kanalabschnitts, der beabstandet von der Luftaustrittsöffnung angeordnet ist, kann eine Richtung der von dem ersten Kanalabschnitt und zur der Luftaustrittsöffnung strömenden Luft einfach geändert werden. Hierdurch wird auch die Richtung der aus der Luftaustrittsöffnung strömenden Luft entsprechend geändert. Je nach Abstand zwischen dem ersten Kanalabschnitt und der Luftaustrittsöffnung, d.h. je nach Länge des zweiten Kanalabschnitts, erfolgt eine Richtungsänderung der Luft entsprechend einer Verschiebung des ersten Kanalabschnitts.

Gemäß einer bevorzugten Weiterbildung verbindet der zweite Kanalabschnitt den ersten Kanalabschnitt mit dem Luftaustrittsöffnungselement. Dabei weist der zweite Kanalabschnitt Wandabschnitte auf, die entsprechend der Verschiebung des ersten Kanalabschnitts schwenkbar sind, um eine Richtung der aus der Luftaustrittsöffnung strömenden Luft entsprechend einer Stellung der Wandabschnitte zu steuern.

Die Wandabschnitte übernehmen dabei die Funktion von steuerbaren Luftleitelementen, d.h. Lamellen.

Gemäß einer weiteren bevorzugten Weiterbildung weist der erste Kanalabschnitt eine erste Wand und eine zweite Wand auf, die gegenüberliegend zueinander ausgebildet sind. Gegenüberliegend zueinander bedeutet insbesondere parallel zueinander. Die erste Wand und die zweite Wand sind als Teil des ersten Kanalabschnitts mit dem Kanalabschnitt verschiebbar. Die erste Wand und die zweite Wand sind insbesondere starre feststehende Abschnitte des ersten Kanalabschnitts, die nicht relativ zueinander beweglich sind. Ferner sind die erste Wand und die zweite Wand bevorzugt quer, d.h. im Wesentlichen senkrecht zu einer Verschieberichtung des ersten Kanalabschnitts ausgebildet.

Ferner kann der erste Kanalabschnitt durch eine dritte Wand und eine vierte Wand abgegrenzt sein, die gegenüberliegend zueinander, d.h. im Wesentlichen parallel zueinander, angeordnet sind und sich insbesondere parallel zu einer Verschieberichtung des ersten Kanalabschnitts erstrecken. Die dritte Wand und vierte Wand können integral mit dem ersten Kanalabschnitt, d.h. zusammen mit dem ersten Kanalabschnitt bewegbar, ausgebildet sein. Alternativ können die dritte Wand und vierte Wand unabhängig von dem ersten Kanalabschnitt feststehend ausgebildet sein, wobei der erste Kanalabschnitt zusammen mit der ersten Wand und der zweiten Wand zwischen der dritten und vierten Wand in Verschieberichtung verschiebbar ist.

Gemäß einer bevorzugten Weiterbildung ist in dem ersten Kanalabschnitt zumindest ein lamellenartiges bewegliches Luftleitelement angeordnet, das zusammen mit dem ersten Kanalabschnitt verschiebbar ist und angepasst ist, eine Richtung der in dem ersten Kanalabschnitt strömenden Luft und damit eine Richtung der Luftaustrittsöffnung strömenden Luft entsprechend einer Stellung des Luftleitelements zu steuern.

Hierdurch kann die ausströmende Luft nicht nur in Richtung der Verschieberichtung des ersten Kanalabschnitts in ihrer Richtung verändert werden, sondern auch in eine weitere Richtung, die durch das Luftleitelement in dem ersten Kanalabschnitt gesteuert wird.

Es können in dem ersten Kanalabschnitt auch weitere lamellenartige bewegliche Luftelemente angeordnet sein, wobei die Luftelemente bevorzugt parallel und gemeinsam, d.h. im Wesentlichen synchron bewegbar bzw. ansteuerbar ausgebildet sind.

Gemäß einer Weiterbildung ist das Luftleitelement um eine Achse drehbar. Die Achse verläuft bevorzugt im Wesentlichen parallel zur Verschieberichtung des ersten Kanalabschnitts verläuft.

Damit kann die Luft in einer Richtung quer bzw. senkrecht zur Verschieberichtung des ersten Kanalabschnitts gesteuert werden. Zusammen mit einem Verschieben des ersten Kanalabschnitts kann somit eine aus der Luftaustrittsöffnung strömende Luft in alle Richtungen gesteuert werden.

Gemäß einer bevorzugten Weiterbildung kann der erste Kanalabschnitt zumindest eine Zwischenwand aufweisen, die den ersten Kanalabschnitt in zumindest zwei Luftdurchgänge untergliedert. Damit ist die Zwischenwand, ebenso wie die erste Wand und die zweite Wand integral mit dem ersten Kanalabschnitt ausgebildet und zusammen mit dem ersten Kanalabschnitt verschiebbar ausgebildet.

Durch die Untergliederung des ersten Kanalabschnitts in zwei Luftdurchgänge ist eine bessere Ausrichtung der strömenden Luft möglich. Die Zwischenwand dient dabei zusätzlich zu der ersten Wand und der zweiten Wand als ein Luftleitelement.

In dem Fall, in dem der erste Kanalabschnitt eine Zwischenwand aufweist, kann/können in jedem der beiden Luftdurchgänge zumindest ein lamellenartiges bewegliches Luftleitelement bzw. mehrere Luftleitelemente angeordnet sein, so dass in jedem der beiden Luftdurchgänge eine Strömungsrichtung der Luft entsprechend anpassbar ist.

Gemäß einer weiteren bevorzugten Weiterbildung weist der zweite Kanalabschnitt zumindest eine Zwischenwand auf, die den zweiten Kanalabschnitt in zumindest zwei Luftdurchgänge untergliedert.

Bevorzugt ist die Zwischenwand des zweiten Kanalabschnitts entsprechend einer Verschiebung des ersten Kanalabschnitts verschwenkbar. Ferner ist die Zwischenwand des zweiten Kanalabschnitts bevorzugt als manuelles Betätigungselement zur Steuerung der Verschiebung des ersten Kanalabschnitts ausgebildet. Hierfür kann die Zwischenwand in Wirkverbindung mit dem ersten Kanalelement stehen. Zur manuellen Betätigung kann die Zwischenwand einen gegebenenfalls vorstehenden Griffabschnitt aufweisen, den ein Fahrzeuginsasse greifen kann und über den der Fahrzeuginsasse die Zwischenwand verschwenken - zur Steuerung des ersten Kanalabschnitts - und verschieben - zur Steuerung des Luftleitelements in dem ersten Kanalabschnitt - kann.

Es können der erste Kanalabschnitt und der zweite Kanalabschnitt eine Zwischenwand aufweisen, es ist jedoch auch möglich, dass nur einer der beiden Kanalabschnitte eine Zwischenwand aufweist. Der erste Kanalabschnitt als auch der zweite Kanalabschnitt können auch mehrere Zwischenwände aufweisen.

Bevorzugt weist der erste Kanalabschnitt einen im Wesentlichen rechteckigen Strömungsquerschnitt, d.h. einen wirksamen inneren Querschnitt, auf. Ebenso kann der zweite Kanalabschnitt und/oder die Luftaustrittsöffnung einen im Wesentlichen rechteckigen Strömungsquerschnitt aufweisen.

Die vorliegende Erfindung betrifft ferner ein Kraftfahrzeug mit einer erfindungsgemäßen Luftaustrittsvorrichtung zur gesteuerten Zufuhr von Luft zu einem Fahrzeuginnenraum. Hierbei hat die Luftaustrittsöffnung bevorzugt einen rechteckigen Querschnitt, wobei die Luftaustrittsöffnung quer und nicht hochkant im dem Fahrzeuginnenraum angeordnet ist.

Vorstehende Weiterbildungen der Erfindung können soweit möglich und sinnvoll beliebig miteinander kombiniert werden.

Es folgt eine Kurzbeschreibung der Figuren.
- Fig. 1: ist eine schematische geschnittene Seitenansicht einer Luftaustrittsvorrichtung gemäß einem Ausführungsbeispiel der vorliegenden Erfindung in einer ersten Stellung eines ersten Kanalabschnitts.
- Fig. 2: ist eine schematische geschnittene Seitenansicht der Luftaustrittsöffnung gemäß dem Ausführungsbeispiel der vorliegenden Erfindung in einer zweiten Stellung des ersten Kanalabschnitts.
- Fig. 3: ist eine geschnittene Perspektivansicht der Luftaustrittsöffnung gemäß dem Ausführungsbeispiel der Erfindung, wobei sich Luftleitelemente in dem ersten Kanalabschnitt in einer ersten Stellung befinden.
- Fig. 4: ist eine schematische geschnittene Draufsicht der Luftaustrittsvorrichtung gemäß dem Ausführungsbeispiel der Erfindung, wobei sich die Luftleitelemente in dem ersten Kanalabschnitt in der ersten Stellung befinden.
- Fig. 5: ist eine schematische geschnittene Perspektivansicht der Luftaustrittsvorrichtung gemäß dem Ausführungsbeispiel der Erfindung, wobei sich die Luftleitelemente in dem ersten Kanalabschnitt in einer zweiten Stellung befinden.
- Fig. 6: ist eine schematische geschnittene Draufsicht der Luftaustrittsvorrichtung gemäß dem Ausführungsbeispiel der vorliegenden Erfindung, wobei sich die Luftleitelemente in dem ersten Kanalabschnitt in der zweiten Stellung befinden.

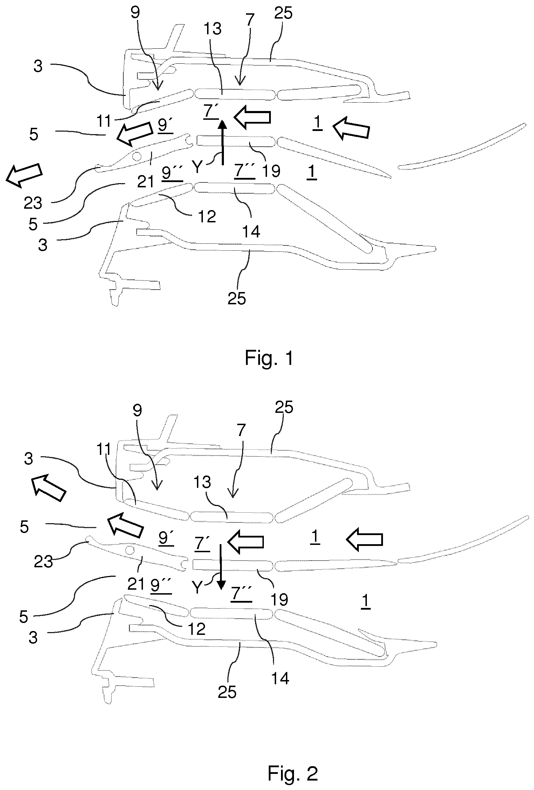

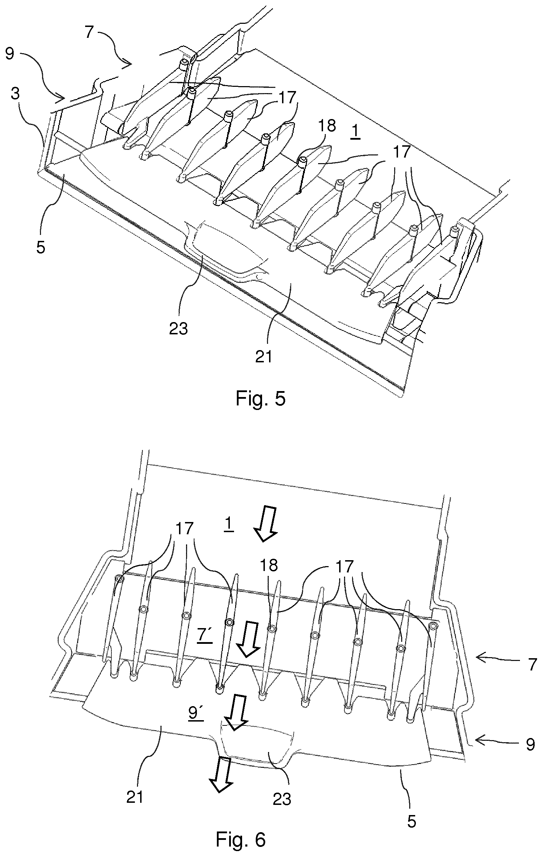

Im Folgenden ist ein Ausführungsbeispiel der vorliegenden Erfindung unter Bezugnahme auf Figuren 1 bis 6 beschrieben.

Wie in Figur 1 gezeigt ist, hat die Luftaustrittsvorrichtung gemäß dem Ausführungsbeispiel der vorliegenden Erfindung einen Luftströmungskanal 1 und ein Luftaustrittsöffnungselement 3. Das Luftaustrittsöffnungselement 3 weist eine Luftaustrittsöffnung 5 auf, durch die Luft von einer Innenraumbelüftungs- und Klimatisierungsvorrichtung in einen Kraftfahrzeuginnenraum geleitet werden kann. Das Luftaustrittsöffnungselement 3 ist beispielsweise in einer Armaturentafel des Kraftfahrzeugs sichtbar integriert. Die Luftaustrittsöffnung 5 hat einen rechteckigen Querschnitt, wobei die Luftaustrittsöffnung 5 in der Armaturentafel des Kraftfahrzeugs bevorzugt in Querrichtung angeordnet ist. Der Luftströmungskanal 1 ist mit dem Luftaustrittsöffnungselement 3 verbunden, wobei er Luft von der Innenraumbelüftungs- und Klimatisierungsvorrichtung über die Luftaustrittsöffnung 5 in den Kraftfahrzeuginnenraum leiten kann. Die Luftaustrittsvorrichtung ist ferner derart ausgestaltet, dass Luft in eine Fahrzeugquerrichtung und eine Fahrzeughochrichtung gesteuert von der Luftaustrittsöffnung 5 in den Fahrzeuginnenraum geleitet wird. Ein Fahrzeugführer oder ein Fahrgast kann insbesondere durch eine manuelle Betätigung eine Richtung der austretenden Luft einstellen.

Der Luftströmungskanal 1 hat unter anderem einen ersten Kanalabschnitt 7 und einen zweiten Kanalabschnitt 9, wobei der zweite Kanalabschnitt zwischen dem ersten Kanalabschnitt 7 und dem Luftaustrittsöffnungselement 3 angeordnet ist.

Der erste Kanalabschnitt 7 ist in eine Richtung quer zu seiner Längsachse verschiebbar ausgebildet und ist insbesondere in Fahrzeughochrichtung verschiebbar.

Der zweite Kanalabschnitt 9 weist schwenkbare Wandabschnitte 11 und 12 auf, die den ersten Kanalabschnitt 7 mit dem Luftaustrittsöffnungselement 3 bzw. der Luftaustrittsöffnung 5 verbinden. Die Wandabschnitte 11 und 12 sind insbesondere entsprechend einer Verschiebung des ersten Kanalabschnitts 7 verschwenkbar. Hierdurch bilden die Wandabschnitte 11 und 12 Luftleitflächen, die die durch den Luftströmungskanal 1 strömende Luft entsprechend der Stellung des ersten Kanalabschnitts 7 leiten bzw. ausrichten. In der in Figur 1 dargestellten Position des ersten Kanalabschnitts 7 befindet sich der erste Kanalabschnitt 7 in einer ersten, oberen Stellung, wodurch die Wandabschnitte 11 und 12 entsprechend verschwenkt sind und Luft nach schräg unten in Richtung der Luftaustrittsöffnung 5 leiten. Hierdurch wird also in dieser Position des ersten Kanalelements 7 die aus der Luftaustrittsöffnung 5 in den Fahrzeuginnenraum strömende Luft nach unten gerichtet bzw. geleitet.

Der erste Kanalabschnitt 7 ist mit einer ersten, oberen Wand 13 und einer zweiten, unteren Wand 14 versehen, die parallel zueinander ausgebildet sind und insbesondere parallel zu einer x-Richtung in einem Fahrzeugkoordinatensystem ausgebildet sind. Die erste Wand 13 und die zweite Wand 14 werden entsprechend einer Verschiebung des ersten Kanalabschnitts 7 ebenso verschoben, wobei auch die erste Wand 13 und die zweite Wand 14 in Bezug auf den ersten Kanalabschnitt 7 feststehende Luftleitelemente darstellen.

Ferner weist der erste Kanalabschnitt 7 eine in Bezug auf den ersten Kanalabschnitt 7 feststehende Zwischenwand 19 auf, die den ersten Kanalabschnitt 7 in einen oberen Luftdurchgang 7' und einen unteren Luftdurchgang 7" untergliedert. Entsprechend der Untergliederung des ersten Kanalabschnitts 7 in die zwei Luftdurchgänge 7' und 7" ist auch der zweite Kanalabschnitt 9 mittels einer schwenkbaren Zwischenwand 21 in zwei Luftdurchgänge 9' und 9" untergliedert. Die Zwischenwand 21 ist entlang einer Schwenkachse in Querrichtung des Strömungskanals 1 schwenkbar und weist insbesondere einen von der Luftaustrittsöffnung 5 vorstehenden Betätigungsabschnitt 23 auf, mit dem ein Fahrzeuginsasse den Wandabschnitt 21 um seine Schwenkachse verschwenken kann. Ein hinteres Ende des Wandabschnitts 21 steht in Wirkverbindung mit dem ersten Kanalabschnitt 7, so dass ein Verschwenken der Zwischenwand 21 eine entsprechende Verschiebung des ersten Kanalabschnitts 7 bewirkt.

Der erste Kanalabschnitt 7 und der zweite Kanalabschnitt 9 sind ferner in einem feststehenden Gehäuse 25 der Luftaustrittsvorrichtung untergebracht, innerhalb dem der erste Kanalabschnitt 7 verschoben bzw. der zweite Kanalabschnitt 9 verschwenkt werden kann.

In Figur 2 ist eine Stellung des ersten Kanalabschnitts 7 gezeigt, wobei der erste Kanalabschnitt 7 vollständig nach unten verschoben ist. Ferner sind in dieser Stellung des ersten Kanalabschnitts 7 die Wandabschnitte 11 und 12 des zweiten Kanalabschnitts 9 entsprechend verschwenkt, so dass diese eine strömende Luft in eine Richtung nach oben hin leiten. Wie in Figur 2 gezeigt ist, ist auch die Zwischenwand 21 entsprechend verschwenkt.

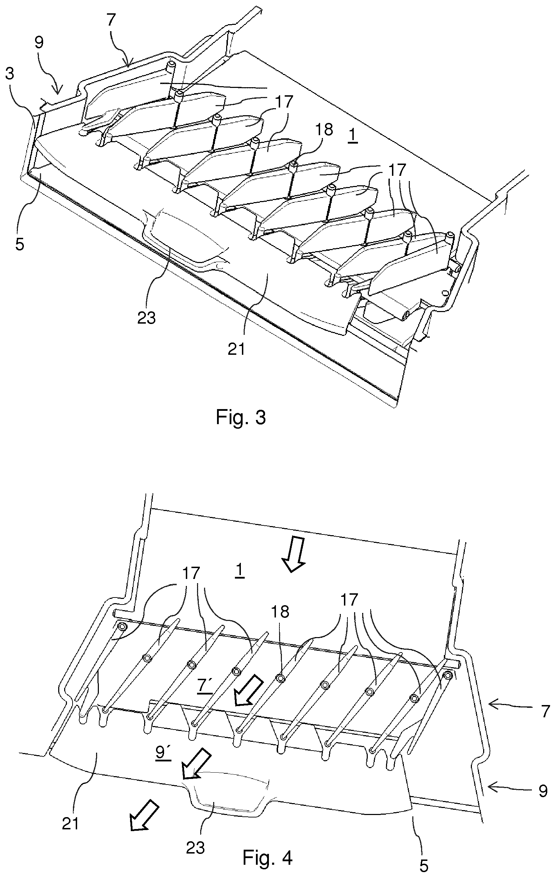

Wie in den Figuren 3 bis 6 gezeigt ist, sind in dem Luftdurchgang 7' Luftleitelemente 17 parallel zueinander angeordnet. Die Luftleitelemente 17 sind in Figuren 1 und 2 nicht dargestellt. In dem Luftdurchgang 7" sind ebenso Luftleitelemente angeordnet, sind aber in den Figuren nicht gezeigt und nachstehend zur Vermeidung einer redundanten Beschreibung nicht weiter beschrieben. Die Luftleitelemente 17 sind jeweils synchron miteinander über eine Achse 18, die sich in Fahrzeughochrichtung und in Verschieberichtung des ersten Kanalabschnitts 7 erstreckt, schwenkbar. Mittels einer Stellung der Luftleitelemente 17 kann eine Richtung der ausströmenden Luft in Fahrzeugquerrichtung, d.h. in die Y-Richtung im Fahrzeugkoordinatensystem verändert werden. Somit kann eine ausströmende Luft sowohl in eine Fahrzeughochrichtung mittels eines Verschiebens des ersten Kanalabschnitts 7 und eine Fahrzeugquerrichtung mittels eines Verschwenkens bzw. Drehens der Luftleitelemente 17 in Fahrzeugquerrichtung verändert werden.

Die Zwischenwand 21 in dem zweiten Kanalabschnitt 9 steht in Wirkverbindung mit vorderen Enden der Luftleitelemente 17, wobei durch ein Verschieben der Zwischenwand 21 an dem Griff 23 in Fahrzeugquerrichtung, d.h. Y-Richtung, ein entsprechendes Verschwenken der Luftleitelemente 17 erfolgt.

Insgesamt kann also eine Strömungsrichtung der ausströmenden Luft manuell durch Betätigen des Betätigungselements 23 in Fahrzeugquerrichtung bzw. Fahrzeughochrichtung eine Strömungsrichtung der aus der Luftaustrittsöffnung 5 strömenden Luft eingestellt werden. Im Ergebnis kann durch den sich überlagernden Effekt der Verschiebbarkeit des ersten Kanalabschnitts 7 und der Luftleitelemente 17 die ausströmende Luft in alle Richtungen gesteuert werden.

## Patentansprüche

1. Luftaustrittsvorrichtung zur gesteuerten Zufuhr von Luft zu einem Fahrzeuginnenraum mit einem Luftströmungskanal (1) und einem Luftaustrittsöffnungselement (3), das eine Luftaustrittsöffnung (5) aufweist,
wobei der Luftströmungskanal (1) mit dem Luftaustrittsöffnungselement (3) verbunden ist und angepasst ist, Luft von einer Innenraumbelüftungsvorrichtung über die Luftaustrittsöffnung (5) in den Fahrzeuginnenraum zu leiten,
wobei das Luftaustrittsöffnungselement (3) ortsfest ausgebildet ist und der Luftströmungskanal (1) einen ersten Kanalabschnitt (7) und einen zweiten Kanalabschnitt (9), der zwischen dem ersten Kanalabschnitt (7) und dem Luftaustrittsöffnungselement (3) angeordnet ist, aufweist, und
wobei der erste Kanalabschnitt (7) in eine Richtung quer zu seiner Längsachse verschiebbar ausgebildet ist,
**dadurch gekennzeichnet, dass**
in dem ersten Kanalabschnitt (7) zumindest ein lamellenartiges, bewegliches Luftleitelement (17) angeordnet ist, das zusammen mit dem ersten Kanalabschnitt (7) verschiebbar ist und angepasst ist, eine Richtung der in dem ersten Kanalabschnitt (7) strömenden Luft und damit eine Richtung der aus der Luftaustrittsöffnung (5) strömenden Luft entsprechend einer Stellung des Luftleitelements (17) zu steuern.

2. Luftaustrittsvorrichtung nach Patentanspruch 1, wobei der zweite Kanalabschnitt (9) den ersten Kanalabschnitt (7) mit dem Luftaustrittsöffnungselement (3) verbindet und entsprechend der Verschiebung des ersten Kanalabschnitts (7) schwenkbare Wandabschnitte (11, 12) aufweist, um eine Richtung der aus der Luftaustrittsöffnung (5) strömenden Luft entsprechend einer Stellung der Wandabschnitte (11, 12) zu steuern.

3. Luftaustrittsvorrichtung nach Patentanspruch 1 oder 2, wobei der erste Kanalabschnitt (7) eine erste Wand (13) und eine zweite Wand (14) aufweist, die gegenüberliegend zueinander und insbesondere quer zu einer Verschieberichtung (Y) des ersten Kanalabschnitts (7) ausgebildet sind.

4. Luftaustrittsvorrichtung nach Patentanspruch 1, wobei das Luftleitelement (17) um eine Achse (18), die insbesondere im Wesentlichen parallel zu der Verschieberichtung (Y) des ersten Kanalabschnitts (7) verläuft, drehbar ist.

5. Luftaustrittsvorrichtung nach einem der Patentansprüche 1 bis 4, wobei der erste Kanalabschnitt (7) zumindest eine Zwischenwand (19) aufweist, die den ersten Kanalabschnitt (7) in zumindest zwei Luftdurchgänge (7', 7") untergliedert.

6. Luftaustrittsvorrichtung nach einem der Patentansprüche 1 bis 5, wobei der zweite Kanalabschnitt (9) zumindest eine Zwischenwand (21) aufweist, die den zweiten Kanalabschnitt (9) in zumindest zwei Luftdurchgänge (9', 9") untergliedert.

7. Luftaustrittsvorrichtung nach Patentanspruch 6, wobei die Zwischenwand (21) des zweiten Kanalabschnitts entsprechend einer Verschiebung des ersten Kanalelements (7) verschwenkbar ist.

8. Luftaustrittsvorrichtung nach einem der Patentansprüche 6 oder 7, wobei die Zwischenwand (21) des zweiten Kanalabschnitts als manuelles Betätigungselement zur Steuerung der Verschiebung des ersten Kanalelements (7) ausgebildet ist.

9. Luftaustrittsvorrichtung nach einem der Patentansprüche 1 bis 8, wobei der erste Kanalabschnitt (7) und/oder der zweite Kanalabschnitt (9) und/oder die Luftaustrittsöffnung (5) einen im Wesentlichen rechteckigen Strömungsquerschnitt aufweist/aufweisen.

## Claims

1. An air outlet device for controlled supplying of air to a vehicle interior, with an air flow channel (1) and an air outlet opening element (3) which has an air outlet opening (5),
wherein the air flow channel (1) is connected to the air outlet opening element (3) and is adapted to conduct air from an interior ventilation device into the vehicle interior via the air outlet opening (5),
wherein the air outlet opening element (3) is formed to be stationary and the air flow channel (1) has a first channel portion (7) and a second channel portion (9) which is arranged between the first channel portion (7) and the air outlet opening element (3), and
wherein the first channel portion (7) is designed to be displaceable in a direction transversely to its longitudinal axis,
**characterised in that**
at least one fin-like, movable air conducting element (17) is arranged in the first channel portion (7), which element together with the first channel portion (7) is displaceable and is adapted to control a direction of the air flowing in the first channel portion (7) and hence a direction of the air flowing out of the air outlet opening (5) corresponding to a position of the air conducting element (17).

2. An air outlet device according to Claim 1, wherein the second channel portion (9) connects the first channel portion (7) to the air outlet opening element (3) and has wall portions (11, 12) which are pivotable corresponding to the displacement of the first channel portion (7), in order to control a direction of the air flowing out of the air outlet opening (5) corresponding to a position of the wall portions (11, 12).

3. An air outlet device according to Claim 1 or Claim 2, wherein the first channel portion (7) has a first wall (13) and a second wall (14) which are located opposite each other and in particular transversely to a direction of displacement (Y) of the first channel portion (7).

4. An air outlet device according to Claim 1, wherein the air conducting element (17) is rotatable about an axis (18) which runs in particular substantially parallel to the direction of displacement (Y) of the first channel portion (7).

5. An air outlet device according to one of Claims 1 to 4, wherein the first channel portion (7) has at least one intermediate wall (19) which subdivides the first channel portion (7) into at least two air passages (7', 7").

6. An air outlet device according to one of Claims 1 to 5, wherein the second channel portion (9) has at least one intermediate wall (21) which subdivides the second channel portion (9) into at least two air passages (9', 9").

7. An air outlet device according to Claim 6, wherein the intermediate wall (21) of the second channel portion is pivotable corresponding to a displacement of the first channel element (7).

8. An air outlet device according to one of Claims 6 or 7, wherein the intermediate wall (21) of the second channel portion is designed as a manual actuating element for controlling the displacement of the first channel element (7).

9. An air outlet device according to one of Claims 1 to 8, wherein the first channel portion (7) and/or the second channel portion (9) and/or the air outlet opening (5) has/have a substantially rectangular flow cross-section.

## Revendications

1. Dispositif de sortie d'air permettant l'introduction commandée d'air dans l'habitacle d'un véhicule comprenant un canal de circulation d'air (1) et un élément d'ouverture de sortie d'air (3) qui comporte une ouverture de sortie d'air (5),
le canal de circulation d'air (1) étant relié à l'élément d'ouverture de sortie d'air (3) et adapté pour transférer de l'air d'un dispositif d'aération d'habitacle dans l'habitacle du véhicule par l'intermédiaire de l'ouverture de sortie d'air (5),
l'élément d'ouverture de sortie d'air (3) étant stationnaire et le canal de circulation d'air (1) comportant un premier segment de canal (7) et un second segment de canal (9) qui est situé entre le premier segment de canal (7) et l'élément d'ouverture de sortie d'air (3), et
le premier segment de canal (7) étant mobile en translation transversalement à son axe longitudinal,
**caractérisé en ce que**
dans le premier segment de canal (7) est monté au moins un élément de guidage mobile (17) en forme de lamelles qui peut être déplacé en translation avec le premier segment de canal (7), et est susceptible de commander la direction de l'air circulant dans le premier segment de canal (7) et ainsi la direction de l'air sortant de l'ouverture de sortie d'air (5) en fonction de la position de l'élément de guidage de l'air (17).

2. Dispositif de sortie d'air conforme à la revendication 1,
dans lequel le second segment de canal (9) relie le premier segment de canal (7) à l'élément d'ouverture de sortie d'air (3) et comporte un segment de paroi (11, 12) pivotant en fonction de la translation du premier segment de canal (7) pour commander la direction de l'air sortant de l'ouverture de sortie d'air (5) selon la position du segment de paroi (11, 12).

3. Dispositif de sortie d'air conforme à la revendication 1 ou 2,
dans lequel le premier segment de canal (7) comporte une première paroi (13) et une seconde paroi (14) qui sont situées en regard l'une de l'autre et en particulier transversalement à la direction de translation (Y) du premier segment de canal (7).

4. Dispositif de sortie d'air conforme à la revendication 1,
dans lequel l'élément de guidage de l'air (17) est mobile en rotation autour d'un axe (18) qui s'étend en particulier essentiellement parallèlement à la direction de translation (Y) du premier segment de canal (7).

5. Dispositif de sortie d'air conforme à l'une des revendications 1 à 4,
dans lequel le premier segment de canal (7) comporte au moins une paroi intermédiaire (19) qui subdivise le premier segment de canal (7) en au moins deux passages d'air (7', 7").

6. Dispositif de sortie d'air conforme à l'une des revendications 1 à 5,
dans lequel le second segment de canal (9) comporte au moins une paroi intermédiaire (21) qui subdivise le second segment de canal (9) en au moins deux passages d'air (9', 9").

7. Dispositif de sortie d'air conforme à la revendication 6,
dans lequel la paroi intermédiaire (21) du second segment de canal peut pivoter conformément à la translation du premier élément de canal (7).

8. Dispositif de sortie d'air conforme à l'une des revendications 6 et 7,
dans lequel la paroi intermédiaire (21) du second segment de canal est réalisée sous la forme d'un élément d'actionnement manuel permettant de commander la translation du premier élément de canal (7).

9. Dispositif de sortie d'air conforme à l'une des revendications 1 à 8,
dans lequel le premier segment de canal (7) et/ou le second segment de canal (9) et/ou l'ouverture de sortie d'air (5) a(ont) une section d'écoulement essentiellement rectangulaire.
